# FASCICULE DE BREVET EUROPEEN

(11) **EP 3 707 999 B1**
(45) Date de publication et mention de la délivrance du brevet: **26.06.2024**
(21) Numéro de dépôt: 20162615.7
(22) Date de dépôt: 12.03.2020
(51) Int. Cl.: A01K 1/06

(54) **BARRIERE DE TYPE CORNADIS**
SCHRANKE VOM TYP FRESSGITTER
FENCE WITH FEEDING RACK

(30) Priorité: 15.03.2019 FR 1902688
(43) Date de publication de la demande: 16.09.2020
(73) Titulaire: Tubex, 45300 Escrennes (FR)
(72) Inventeur: JOURDAIN, Dominique, 45300 Escrennes (FR)
(74) Mandataire: Cabinet Beau de Loménie

(56) Documents cités:
- DE-A1- 3 211 064
- DE-U1- 20 115 338
- DE-U1-202011 005 109
- FR-A1- 2 611 429
- FR-A1- 2 979 799

## Description

### Domaine Technique

La présente invention concerne une barrière de type cornadis suédois.

### Technique antérieure

Il est connu de l'art antérieur des barrières de type cornadis suédois comprenant un longeron inférieur et des structures latérales montées sur le longeron, définissant entre elles des espaces permettant à un animal de passer sa tête de l'autre côté de la barrière par exemple pour atteindre de la nourriture qui s'y trouverait. Ces barrières comprennent généralement un balancier mobile pouvant autoriser ou bien bloquer le passage de la tête de l'animal dans ou hors de l'espace, grâce à un système de verrouillage. Le système de verrouillage comprend généralement une tringle parallèle au longeron et un élément formant une butée permettant de bloquer le mouvement du balancier. L'élément formant une butée est généralement fixé sur la tringle. Toutefois, ces systèmes de verrouillage présentent des fragilités dues aux efforts exercés par les animaux sur la tringle et peuvent s'user ou se déformer rapidement. Un besoin existe donc en ce sens.

La demande de brevet FR 2 979 799 divulgue une barrière de cornadis selon le préambule de la revendication 1.

### Exposé de l'invention

Le présent exposé se rapporte à une barrière de type cornadis, comprenant :
- un longeron inférieur,
- au moins une première et une deuxième structure latérale, montées sur le longeron, un espace pour le passage du cou d'un animal étant délimité par le longeron et les première et deuxième structures latérales,
- un balancier configuré pour adopter une position de blocage dans laquelle le balancier fait obstacle au passage du cou d'un animal dans l'espace et pour quitter la position de blocage et libérer le passage du cou de l'animal dans l'espace,
- un organe de verrouillage configuré pour retenir le balancier dans la position de blocage, l'organe de verrouillage comprenant une butée, contre laquelle un organe de coopération du balancier est destiné à venir en appui dans la position de blocage, et
un système de déverrouillage configuré pour occuper une position de déverrouillage pour permettre le mouvement du balancier hors de la position de blocage, et une position inactive pour permettre à l'organe de verrouillage de retenir le balancier dans la position de blocage.

Le système de déverrouillage comprend au moins une rampe configurée pour :
- dans la position inactive du système de déverrouillage, adopter une première position écartée de l'organe de verrouillage dans laquelle l'organe de verrouillage est dégagé pour pouvoir retenir le balancier dans la position de blocage, et
- dans la position de déverrouillage du système de déverrouillage, adopter une deuxième position dans laquelle l'organe de coopération est apte à glisser sur l'au moins une rampe pour échapper à l'organe de verrouillage, de sorte que le système de déverrouillage neutralise l'organe de verrouillage de façon à permettre le mouvement du balancier hors de la position de blocage.

Dans le présent exposé, les termes supérieur, inférieur, haut, bas sont à comprendre dans un sens relatif uniquement. Ils permettent de distinguer deux localisations essentiellement opposées. En particulier, la droite reliant un point « haut » à un point « bas » n'est pas nécessairement verticale au sens usuel du terme.

La barrière est de type cornadis suédois, c'est-à-dire ne comportant pas de longeron supérieur. Sur une barrière de type cornadis suédois, les structures latérales sont fixées au longeron inférieur.

On entend par l'expression « le système de déverrouillage neutralise l'organe de verrouillage » que le système de déverrouillage empêche la fonction de blocage de l'organe de verrouillage dans sa position de déverrouillage. Lorsqu'il est neutralisé, l'organe de verrouillage ne peut donc pas retenir le balancier dans la position de blocage. Par exemple, pour neutraliser l'organe de verrouillage, le système de déverrouillage l'escamote ou l'absorbe dans son épaisseur, par exemple en le logeant dans un emplacement ou dans un renfoncement prévu à cet effet.

Ainsi, pour déverrouiller le balancier de la position de blocage, le système de déverrouillage passe de la position inactive à la position de déverrouillage. L'organe de verrouillage peut donc être fixe par rapport au longeron et aux structures latérales et ainsi être préservé de l'usure et avoir une meilleure résistance aux efforts exercés par les animaux.

L'organe de verrouillage comprend une butée, contre laquelle un organe de coopération du balancier est destiné à venir en appui dans la position de blocage.

Ainsi, il est possible d'immobiliser un animal, de sorte à lui administrer des soins médicaux par exemple.

Dans certains modes de réalisation, le système de déverrouillage comprend un emplacement permettant de loger l'organe de verrouillage dans son épaisseur lorsque le système de déverrouillage est dans la position de déverrouillage.

Ainsi, lorsque l'organe de verrouillage est dans l'emplacement, celui-ci est neutralisé et le balancier peut sortir de la position de blocage. L'emplacement est disposé dans l'épaisseur du système de déverrouillage de sorte que l'organe de verrouillage puisse être logé dans son épaisseur et ne forme donc pas, par rapport au système de déverrouillage, une saillie apte à retenir le balancier.

Par exemple, l'emplacement est un renfoncement, tel qu'une fente, dans l'épaisseur du système de déverrouillage.

Le système de déverrouillage comprend au moins une rampe configurée pour, dans la position inactive du système de déverrouillage, adopter une première position écartée de l'organe de verrouillage, et dans la position de déverrouillage du système de déverrouillage, adopter une deuxième position dans laquelle l'organe de coopération est apte à glisser sur l'au moins une rampe pour échapper à l'organe de verrouillage.

L'au moins une rampe peut être telle que sa hauteur varie dans une direction parallèle à la direction longitudinale du longeron ; par exemple, sa hauteur peut varier au fur et à mesure qu'on la parcourt horizontalement. Cependant, on peut prévoir que l'au moins une rampe soit orientée différemment, par exemple en ayant une hauteur qui varie dans un plan perpendiculaire à la direction longitudinale du longeron, alors que sa hauteur serait constante lorsqu'on la parcourt parallèlement à cette direction longitudinale. En position de déverrouillage, la rampe neutralise l'organe de verrouillage en le masquant, et le balancier peut pivoter librement. En revanche, dans la position inactive du système de verrouillage, la rampe est écartée de l'organe de verrouillage, par exemple angulairement, de sorte que l'organe de verrouillage est dégagé pour pouvoir ainsi retenir le balancier.

Dans certains modes de réalisation, l'au moins une rampe passe de la première à la deuxième position et inversement par rotation autour d'un axe parallèle au longeron.

Ainsi, le passage entre la position inactive et la position de déverrouillage du système de déverrouillage peut être réalisé de manière simple.

Dans certains modes de réalisation, l'au moins une rampe est formée sur un manchon mobile en rotation autour de son axe, parallèle au longeron.

Le manchon permet une fabrication et un montage de l'au moins une rampe plus aisé. Comme indiqué ci-dessus, la rampe peut être parallèle à l'axe du manchon ou dans une autre direction, par exemple radiale.

Dans certains modes de réalisation, l'organe de verrouillage comprend un support, le manchon étant porté par le support.

Le montage et le maintien du manchon est ainsi plus aisé.

Par exemple, le support comprend une lumière dans laquelle peut s'insérer le manchon, permettant le montage du manchon sur le support.

Dans certains modes de réalisation, le manchon est monté sur une tringle parallèle au longeron et pivotante autour de l'axe du manchon.

Ainsi, dans le cas où une pluralité de structures latérales serait montées sur le longeron, il est possible en faisant pivoter la tringle autour de son axe de faire passer le système de déverrouillage de la position de déverrouillage à la position inactive, et inversement.

Ainsi, la tringle est montée sur l'organe de verrouillage via le manchon.

Dans certains modes de réalisation, l'organe de verrouillage est fixé sur le longeron.

L'organe de verrouillage permet ainsi d'assurer une grande résistance aux efforts exercés par un animal pour maintenir le balancier dans la position de blocage.

Dans certains modes de réalisation, les première et deuxième structures latérales sont montées sur le longeron via au moins un élément de montage, l'organe de verrouillage étant fixé sur l'au moins un élément montage de la première structure latérale.

L'organe de verrouillage ainsi fixé sur l'élément de montage permet également d'assurer une grande résistance pour maintenir le balancier dans la position de blocage. Ces dispositions permettent également de pouvoir facilement modifier l'écartement entre les structures latérales le long du longeron.

Dans certains modes de réalisation, l'élément de montage comprend deux portions de montage, configurées pour être fixées l'une à l'autre de façon à former une coquille enserrant le longeron.

Ainsi, le montage des structures latérales sur le longeron est réalisé de manière simple et solide, et peut être non définitif, de sorte que les structures peuvent être démontées facilement, par exemple pour modifier l'écartement entre elles.

Ainsi, on comprend que les première et deuxième structures latérales peuvent être fixées directement sur le longeron, par exemple par soudure, soit par l'intermédiaire d'éléments de montage.

Dans le cas où la première structure latérale est fixée directement sur le longeron, l'organe de verrouillage est fixé sur le longeron, par exemple par soudure.

Dans le cas où la première structure latérale est fixée sur le longeron via un élément de montage, l'organe de verrouillage peut être fixé sur l'élément de montage, par exemple par soudure.

Dans certains modes de réalisation, la barrière de type cornadis comprend une pluralité de structures latérales formant une pluralité d'espaces de passage du cou d'un animal, chaque structure latérale étant fixée sur le longeron.

### Brève description des dessins

[Fig. 1A] La figure 1A représente une vue en perspective de la barrière de type cornadis suédois selon un premier exemple de réalisation.
[Fig. 1B] La figure 1B représente une vue en perspective de la barrière de type cornadis suédois selon un deuxième exemple de réalisation.
[Fig. 2A] La figure 2A représente une vue de face d'une portion de la barrière selon le premier exemple de réalisation.
[Fig. 2B] La figure 2B représente une vue de face d'une portion de la barrière selon le deuxième exemple de réalisation.
[Fig. 3A] La figure 3A représente une vue en coupe IIIA-IIIA de la barrière selon le premier exemple de réalisation.
[Fig. 3B] La figure 3B représente une vue en coupe IIIB-IIIB de la barrière selon le deuxième exemple de réalisation.
[Fig. 4] La figure 4 représente une vue éclatée d'une portion de la barrière selon le deuxième exemple de réalisation.
[Fig. 5] La figure 5 représente également une vue éclatée d'une portion de la barrière selon le deuxième exemple de réalisation.
[Fig. 6] La figure 6 représente une vue de face d'une portion de la barrière, représentant plusieurs positions du balancier selon le deuxième exemple de réalisation.
[Fig. 7A] La figure 7A représente une vue de face d'une portion de la barrière, dans laquelle le système de déverrouillage est en position de déverrouillage selon le deuxième exemple de réalisation.
[Fig. 7B] La figure 7B représente une vue de face d'une portion de la barrière, dans laquelle le système de déverrouillage est en position inactive et le balancier en position de blocage selon le deuxième exemple de réalisation.

### Description des modes de réalisation

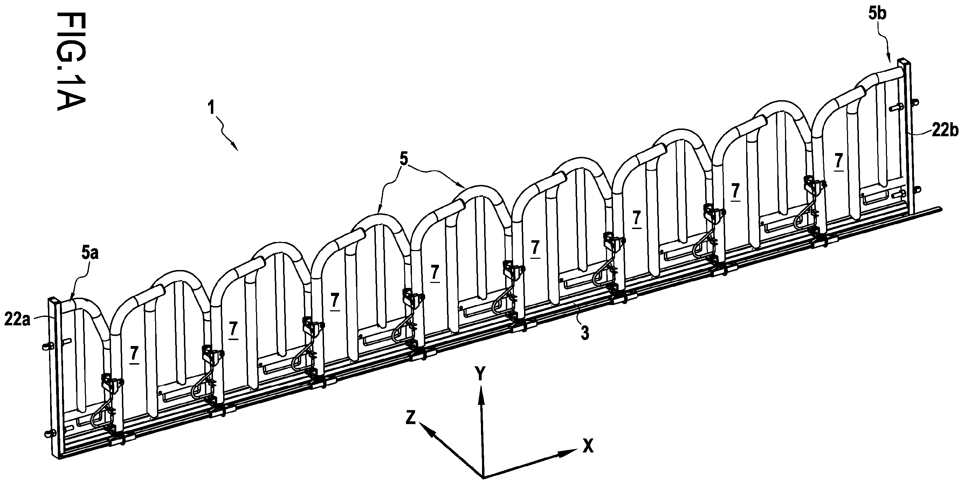

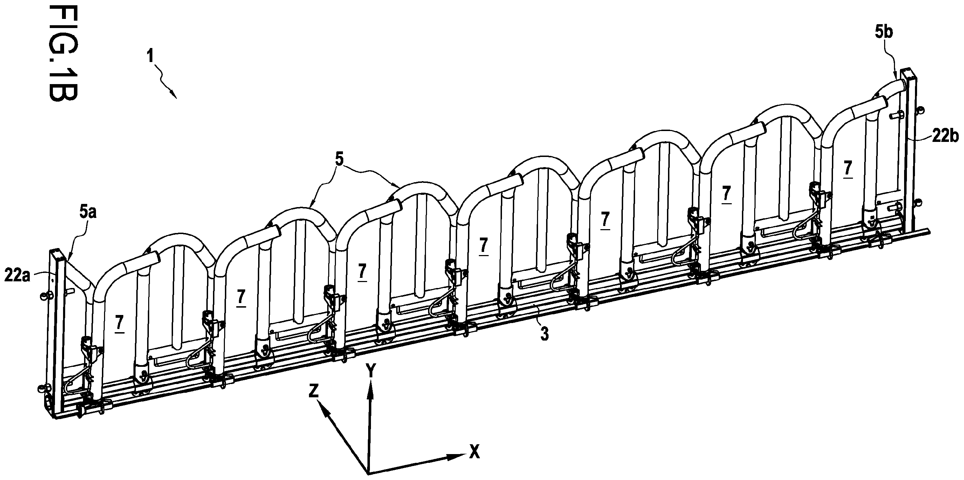

Les figures 1A et 1B représentent une vue d'ensemble d'une barrière 1 de type cornadis suédois. La barrière 1 comprend un longeron 3, s'étendant selon une première direction X, et une pluralité de structures latérales 5 montées les unes à la suite des autres sur le longeron 3 selon la première direction X. Le longeron 3 et deux structures latérales consécutives forment un espace 7 dans lequel peut s'insérer la tête ou le cou d'un animal, tel que du bétail. Le longeron est destiné à former une limite inférieure de l'espace 7. Ainsi, la barrière 1 comprend une pluralité d'espaces 7 consécutifs. Comme représenté sur les figures 1A, 2A et 3A, selon un premier exemple de réalisation, les structures latérales 5 peuvent être fixées directement sur le longeron 3. Cela permet de renforcer la résistance de la barrière, par exemple pour des animaux ayant un gabarit important comme des taureaux. Selon un deuxième exemple de réalisation, les structures latérales 5 peuvent également être montées de manière amovible sur le longeron 3 via des éléments de montage 9a, 9b visibles sur les figures 1B, 2B et 3B. Ainsi, l'écartement entre les structures latérales 5 selon la première direction X pourrait être modifié de façon à s'adapter au gabarit de l'animal.

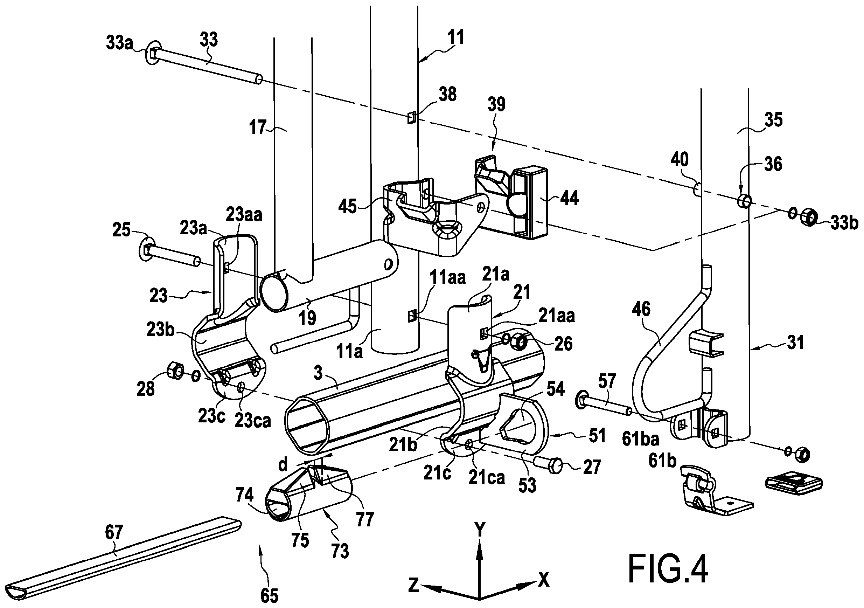

Les figures 4 à 7B représentent la barrière selon le deuxième exemple de réalisation, c'est-à-dire dans laquelle les structures latérales 5 sont fixées sur le longeron 3 via des éléments de montage. La description de ces figures correspond également au premier exemple de réalisation pour les éléments communs, c'est-à-dire ce qui ne concerne pas la fixation des structures latérales 5 sur le longeron 3.

Par exemple, la barrière 1 peut former une portion de délimitation d'un enclos à bétail. La nourriture est généralement disposée à l'extérieur de l'enclos à bétail, contre une portion extérieure de la barrière 1 de délimitation.

Dans un autre exemple de réalisation, la barrière 1 peut former une portion de délimitation d'un râtelier destiné à contenir de la nourriture.

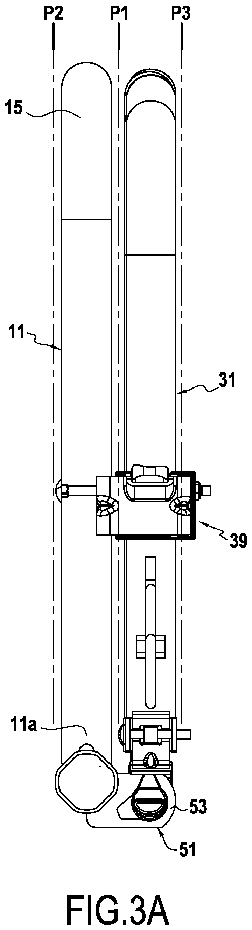

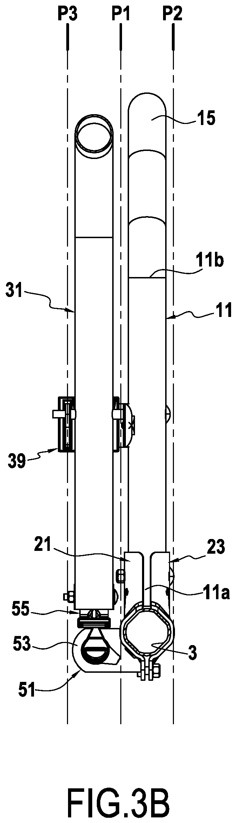

Comme représenté sur les figures 3A et 3B, les structures latérales 5 et le longeron 3 sont compris entre deux plans parallèles P1 et P2. Un premier plan P1 est disposé d'un côté de la barrière, par exemple à l'extérieur de l'enclos. Un deuxième plan P2 est disposé de l'autre côté de la barrière, par exemple à l'intérieur de l'enclos. Les plans P1 et P2 s'étendent selon la direction X et une direction Y sensiblement perpendiculaire à la direction X.

Les structures latérales 5 sont identiques, à l'exception des structures latérales externes 5A, 5B se trouvant en bordure externe de la barrière 1. Une structure latérale 5 sera décrite ci-après, ne correspondant pas aux structures latérales externes 5A, 5B. Les autres structures latérales 5 autres que les structures latérales externes 5A, 5B répondent à la description donnée ci-après.

Dans cet exemple de réalisation, la structure latérale 5 a une forme sensiblement de U inversé. La structure latérale 5 comprend donc un premier montant 11 et un deuxième montant 13, les premier et deuxième montants 11, 13 étant sensiblement parallèles. Les premier et deuxième montants 11, 13 sont transversaux et, dans cet exemple, sensiblement perpendiculaires, au longeron 3. Les premier et deuxième montants 11, 13 s'étendent donc ici dans la direction Y. Les premier et deuxième montants 11, 13 correspondent aux bras latéraux du U. Le premier montant 11 forme une limite latérale d'un premier espace 7a et le deuxième montant 13 forme une limite latérale d'un deuxième espace 7b consécutif au premier espace 7a. Une première portion extrémité 11a du premier montant 11 et une première portion d'extrémité 13a du deuxième montant 13, correspondant aux portions d'extrémité libres des bras du U, coopèrent avec le longeron 3 directement comme représenté sur les figures 1A, 2A et 3A, ou bien via les éléments de montage 9a, 9b, comme représenté sur les figures 1B, 2B et 3B. Une deuxième portion d'extrémité 11b du premier montant 11, opposée à la première portion d'extrémité 11a, et une deuxième portion d'extrémité 13b du deuxième montant 13, opposée à la première portion d'extrémité 13a, sont reliées par une traverse 15. La traverse 15 est ici courbée et ses portions d'extrémité sont disposées dans le prolongement des deuxièmes portions d'extrémité 11b, 13b des premier et deuxième montants 11, 13, de façon à éviter de former un angle saillant contre lequel les animaux pourraient se blesser. La traverse 15 correspond à la barre centrale du U. La traverse 15 est ici formée avec les premier et deuxième montants 11, 13. Toutefois, il pourrait être envisagée que la traverse 15 soit fabriquée indépendamment des premier et deuxième montants 11, 13 et soit ensuite fixée sur les deuxième extrémités 11b, 13b des premier et deuxième montants 11, 13, par exemple par soudage.

La structure latérale 5 comprend en outre, ici, des barres de renforcement 17, 19, formant dans l'exemple représenté sensiblement un T inversé. La barre verticale du T correspond à la barre de renforcement 17. L'extrémité libre de la barre de renforcement 17 est fixée sur une portion centrale de la traverse 15. La barre horizontale du T correspond à la barre de renforcement 19. Les extrémités de la barre de renforcement 19 sont chacune fixées à un montant parmi les premier et deuxième montants 11, 13. En variante, on peut prévoir que les barres verticales 17 soient fixées directement au longeron, sans nécessairement ajouter de barre horizontale. Les barres de renforcement 17, 19 permettent de renforcer la résistance de la structure latérale 5 et d'éviter le passage de la tête des animaux à l'intérieur de l'espace formé entre les premier et deuxième montants 11, 13 et la traverse 15. Optionnellement, un élément de renforcement additionnel 20, est fixé à la barre de renforcement 19 de façon à éviter que le passage du cou des animaux à l'intérieur de l'espace formé entre la barre de renforcement 19, le longeron 3 et les premier et deuxième montants 11, 13. Dans l'exemple de réalisation représenté sur les figures 1A, 2A et 3A, la structure latérale 5 est montée et fixée directement sur le longeron 3. Dans cet exemple de réalisation, les premières portions d'extrémité 11A et 13A des premier et deuxième montants 11, 13 sont fixées sur le longeron 3 par exemple par soudage, ou bien par tout autre moyen connu de l'homme du métier. Ainsi, la fixation des structures présentent une résistance importante. De telles barrières conviennent donc pour des animaux ayant une forte corpulence, par exemple pour des taureaux.

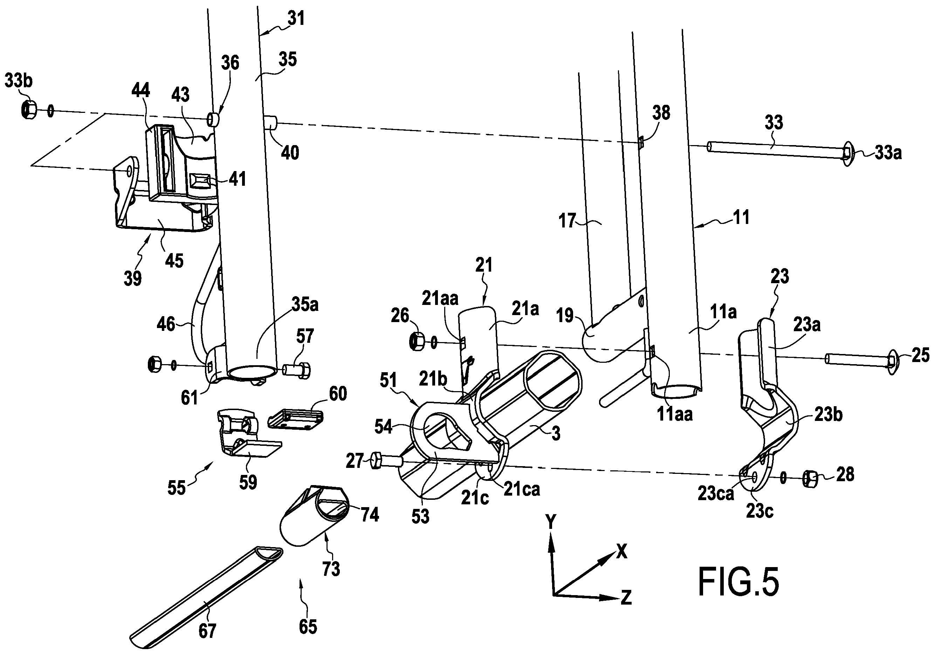

Selon un autre exemple de réalisation représenté sur les figures 1B, 2B et 3B, la structure latérale 5 est montée sur le longeron 3 via deux éléments de montage 9a et 9b. L'élément de montage 9a sera décrit ci-après, en référence aux figures 4 et 5. Cette description s'applique à tous les éléments de montage. L'élément de montage 9a comprend une première et une deuxième portion de montage 21, 23 formant deux demi-coquilles et pouvant être assemblées de façon à former une coquille. La première portion d'extrémité 11a du premier montant 11 et une portion du longeron 3 sont donc enserrées, ou prises en sandwich, entre les première et deuxième portions de montage 21, 23. Ainsi, la structure latérale 5 est montée sur le longeron 3 de façon démontable et par des moyens présentant une résistance accrue aux forces exercées sur la barrière 1 par les animaux par rapport à une fixation par soudage par exemple.

Dans cet exemple de réalisation, une première partie 21a de la première portion de montage 21 et une première partie 23a de la deuxième portion de montage 23 sont configurées pour enserrer la première portion d'extrémité 11a du montant 11. Une deuxième partie 21b de la première portion de montage 21 et une deuxième partie 23b de la deuxième portion de montage 23 sont configurées pour enserrer la portion du longeron 3. Autrement dit, lorsque les première et deuxième portions de montage 21, 23 sont assemblées, les premières parties 21a et 23a des première et deuxième portions de montage 21, 23 coopèrent avec la première portion d'extrémité 11a du premier montant 11 par complémentarité de forme ; et les deuxièmes parties 21b et 23b des première et deuxième portions de montage 21, 23 coopèrent avec la portion du longeron 3 par complémentarité de forme.

Les première parties 21a et 23a des première et deuxième portions de montage 21 et 23 sont concaves et forment, lorsqu'elles sont assemblées, un manchon d'axe Y pouvant être disposé autour de l'extrémité d'un montant 11 ou 13 ; les deuxième parties 21b et 23b des première et deuxième portions de montage 21 et 23 sont également concaves et forment, lorsqu'elles sont assemblées, un manchon d'axe X pouvant être disposé autour du longeron inférieur 3.

L'élément de montage 9a comprend en outre des éléments de fixation des première et deuxième portions de montage 21, 23 l'une avec l'autre, sur la portion du longeron 3 et la première portion d'extrémité 11a du premier montant 11. Par exemple, afin d'optimiser la solidité du montage de la structure latérale sur le longeron 3, les éléments de fixation assurent la fixation des première parties 21a, 23a sur la première portion d'extrémité 11a du montant 11 d'une part et la fixation des deuxièmes parties 21b, 23b sur la portion du longeron 3.

Ainsi, dans cet exemple de réalisation, un orifice traversant 21aa, 23aa est ménagé dans chacune des premières parties 21a et 23a des première et deuxième portions de montage 21, 23. Les orifices traversant 21aa, 23aa des premières parties 21a, 23a se font face lorsque les première et deuxième portions de montage 21, 23 sont assemblées. Un orifice traversant 11aa est ménagé dans la première portion d'extrémité 11a du premier montant 11. Les orifices traversants 21aa, 23aa des premières parties 21a, 23a et l'orifice traversant 11aa de la première portion d'extrémité 11a sont alignés lorsque les première et deuxième portions de montage 21, 23 sont assemblées et coopèrent avec la première portion d'extrémité 11a. Dans cet exemple de réalisation, les éléments de fixation comprennent une première vis 25 destinée à être insérée dans les orifices traversants 21aa, 23aa, 11aa, et un boulon 26 destiné à serrer les première et deuxième portions de montage 21 et 23 sur la première portion d'extrémité 11a du premier montant 11.

Dans cet exemple de réalisation, les première et deuxième portions de montage 21, 23 comprennent en outre chacune une oreille 21c et 23c. Les oreilles 21c, 23c sont disposées dans le prolongement des deuxièmes parties 21b, 23b des première et deuxième portions de montage 21, 23, respectivement. Les oreilles 21c, 23c comprennent chacune un orifice traversant 21ca, 23ca, les orifices traversants 21ca, 23ca étant destinés à être disposés face à face lorsque les première et deuxième portions de montage 21, 23 sont assemblées. Les éléments de fixation comprennent une deuxième vis 27 destinée à passer au travers des orifices traversants 21ca, 23ca et un boulon 28 permettant de serrer les oreilles 21c, 23c ensemble. Les première et deuxième portions de montage 21, 23 pourraient toutefois être assemblées par tout autre moyen de fixation connu de l'homme du métier.

Les éléments de montage 9a, 9b permettent un montage suffisamment résistant de la structure latérale 5 pour résister à la force d'animaux tels que du bétail.

Les structures latérales externes 5A et 5B sont disposées aux extrémités de la barrière. Ces structures latérales externes 5A, 5B comprennent donc une portion ayant les mêmes caractéristiques que les autres structures latérales 5, et ici, un montant d'extrémité 22A, 22B, respectivement, formant les extrémités de la barrière 1 et étant destinés, par exemple, à être reliés à une autre barrière de l'enclos. Par exemple, la structure latérale externe 5A comprend un premier montant 11 et une portion de la traverse 15. L'extrémité libre de la portion de la traverse 15 est reliée au montant d'extrémité 22A. De la même manière, la structure latérale externe 5B comprend un deuxième montant 13 et une portion de la traverse 15. La portion d'extrémité libre de la traverse 15 est reliée au montant d'extrémité 22B. Les extrémités de la barrière 1 pourraient toutefois être formées par tout autre moyen qu'un montant.

Pour atteindre la nourriture disposée à l'extérieur de l'enclos, les animaux doivent passer leurs têtes de l'autre côté de la barrière. Pour cela, les animaux doivent disposer leur cou au-dessus d'un espace 7, puis abaisser leur tête de façon à ce que leur cou glisse dans l'espace 7, entre le premier montant 11 d'une structure latérale 5 et le deuxième montant 13 d'une structure latérale 5 consécutive. Pour se retirer de l'espace 7, l'animal relève la tête pour que son cou coulisse dans l'espace 7 vers le haut.

La barrière 1 comprend en outre des moyens permettant d'empêcher l'animal de passer son cou vers ou hors de l'espace 7. Ces moyens peuvent permettre d'empêcher l'animal de retirer son cou de l'espace 7, par exemple lorsqu'il doit manger ou subir des examens médicaux. Ces moyens peuvent également permettre d'empêcher que l'animal n'insère son cou dans l'espace 7, par exemple en dehors des heures de repas des animaux.

Pour cela, la barrière 1 comprend une pluralité de balanciers 31 pouvant chacun obstruer un espace 7. Un balancier 31 sera décrit ci-après. Cette description s'applique à tous les balanciers 31.

Le balancier 31 est configuré pour pivoter autour d'un axe 33 qui s'étend selon une direction Z, sensiblement perpendiculaire aux directions X et Y. L'axe 33 est donc sensiblement normal aux premier et deuxième plans P1, P2. Ainsi, la trajectoire du balancier 31, en un point donné du balancier 31, est inscrite dans un plan parallèle aux premier et deuxième plans P1 et P2.

Le balancier 31 est monté sur la structure latérale 5 via son axe 33.

Dans le mode de réalisation représenté, le balancier 31 a sensiblement une forme de L inversé. Le balancier 31 comprend une première portion 35 correspondant à la plus grande barre du L et une deuxième portion 37 transversale à la première portion 35, correspondant à la plus petite barre du L. La deuxième portion 37 est inclinée par rapport à la première portion 35 d'un angle compris entre 45 et 90°, de préférence entre 70 et 90°. Selon l'exemple de réalisation représenté, la deuxième portion 37 est inclinée par rapport à la première portion 35 d'un angle d'environ 80°. Les première et deuxième portions 35, 37 forment entre elle une courbe de façon à éviter les angles saillants pouvant blesser les animaux.

Dans le mode de réalisation représenté, la première portion 35 comprend un orifice traversant 36, dans lequel est inséré un palier 40 configuré pour recevoir l'axe 33. Le palier 40 permet ainsi de limiter l'usure de l'axe 33 et du balancier 31. L'axe 33 est monté librement dans le palier 40, afin que le balancier 31 puisse pivoter librement autour de l'axe 33. Selon une variante, l'axe pourrait être monté directement dans l'orifice traversant 36 de la première portion 35.

Le premier montant 11 comprend également un orifice traversant 38 destiné à recevoir l'axe 33. L'axe 33 peut être monté librement ou non dans l'orifice traversant 38 du premier montant 11 de la structure latérale 5. L'axe 33 peut comprendre des éléments de butée permettant le maintien de l'axe 33 dans les orifices traversant 36, 38 du premier montant 11 et du balancier 31. Par exemple, l'axe 33 peut être une vis. Dans ce cas l'un des éléments de butée est une tête de vis 33a et un autre élément de butée est un écrou 33b vissé sur le filetage de la vis. Toutefois, l'axe 33 peut être réalisé sous toute autre forme, par exemple une simple tige comprenant des butées à chacune de ses extrémités.

Ainsi, le balancier 31 est décalé par rapport aux structures latérales 5 et au longeron 3. En effet, le balancier 31 ne se trouve pas entre les premier et deuxième plans P1, P2. Le balancier 31 se trouve par exemple au-delà du plan P1, entre le plan P1 et un plan P3, vers l'extérieur de l'enclos. Ainsi, le balancier 31 est décalé, ici vers l'extérieur de l'enclos. Dans un autre exemple de réalisation, le balancier 31 pourrait être décalé vers l'intérieur de l'enclos.

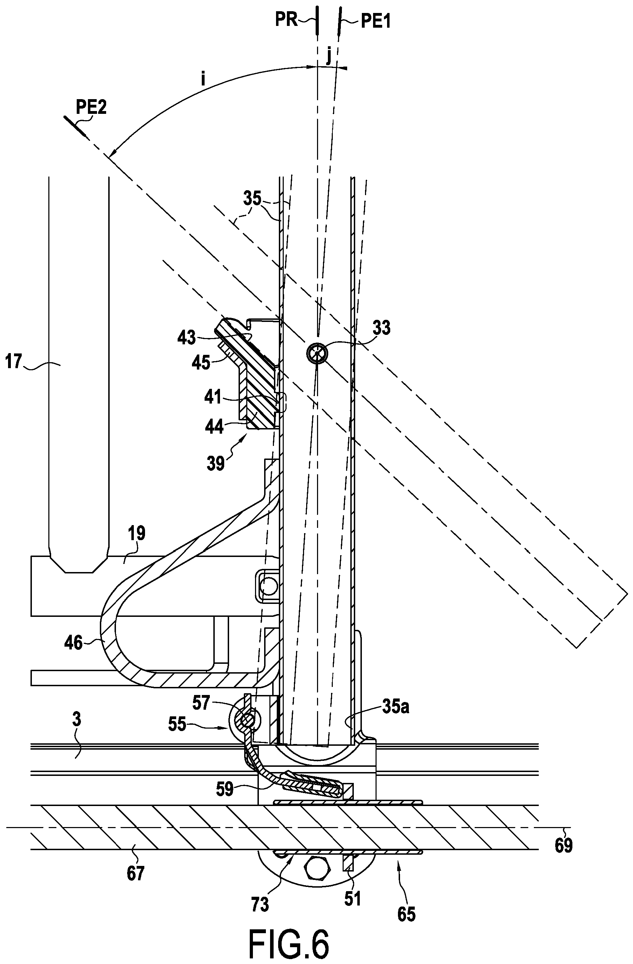

Comme représenté sur figure 6 en trait plein, dans une position de référence PR, correspondant à la position verticale de la première portion 35 du balancier 31, la première portion 35 est alignée avec le premier montant 11 de la structure latérale 5 selon la troisième direction Z. Autrement dit, les axes de la première portion 35 du balancier 31 et du premier montant 11 de la structure latérale 5 sont inclus dans un plan formé par les deuxième et troisième directions Y, Z.

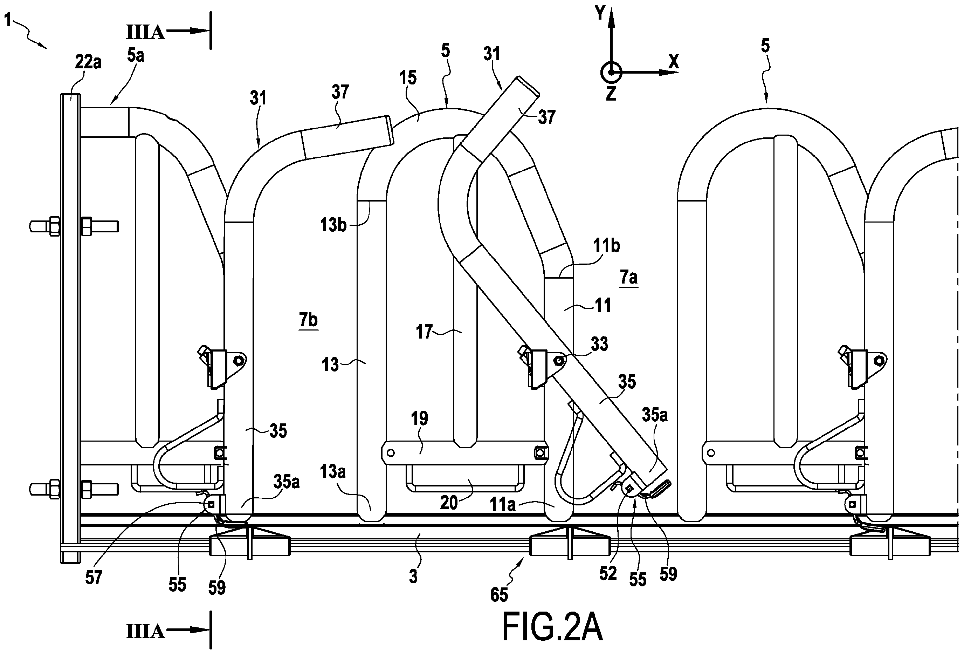

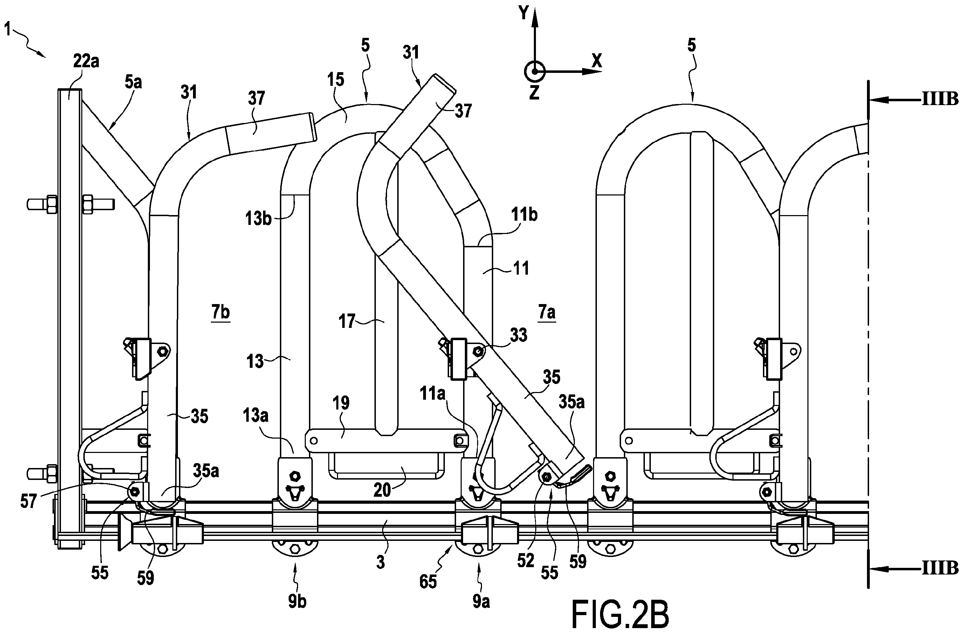

Sur les figures 2A et 2B, le balancier 31 configuré pour obstruer l'espace 7b occupe la position de référence PR. Dans cette position, la deuxième portion 37 du balancier 31 ferme l'espace, ici 7b. Autrement dit, dans la position de référence PR, la deuxième portion 37 du balancier 31 forme une limite de l'espace 7b. Dans cette position, la deuxième portion 37 du balancier 31 est sensiblement parallèle au longeron 3, ou forme un angle compris entre 0 et 45° par rapport au longeron 3. De préférence, la deuxième portion 37 forme un angle compris entre 0 et 20° par rapport au longeron 3. Ainsi, dans la position de référence PR, la deuxième portion 37 empêche l'animal d'introduire son cou dans l'espace 7, 7b ou bien de retirer son cou de l'espace.

Un organe de butée 39 peut être monté sur la structure latérale 5 et / ou sur l'axe 33 de façon à définir une première et une deuxième position extrême PE1, PE2 du balancier 31, représentées sur la figure 6 en pointillés, et ainsi, définir l'amplitude de pivotement du balancier 31. L'organe de butée 39 comprend ainsi une première butée 41 configurée pour arrêter le balancier 31 dans la première position extrême PE1, lorsque le balancier 31 pivote dans la direction horaire, vu de l'extérieur de l'enclos ; et une deuxième butée 43 configurée pour arrêter le balancier 31 dans la deuxième position extrême PE2, lorsque le balancier 31 pivote dans la direction anti-horaire, vu de l'extérieur de l'enclos. Le balancier 31 est configuré pour passer de la première position extrême PE1 à la deuxième position extrême PE2 en pivotant dans un sens anti-horaire.

Dans la première position extrême PE1, la première portion 35 du balancier 31 est inclinée d'un angle j compris entre 0 et 30° dans un sens horaire par rapport à la position de référence PR. Dans la première position extrême PE1, la deuxième portion 37 ferme l'espace 7.

Dans la deuxième position extrême PE2, la première portion 35 du balancier 31 est inclinée par rapport à la position de référence PR d'un angle i compris entre 30 et 45° dans un sens anti-horaire. Dans la deuxième position extrême PE2, la deuxième portion 37 du balancier 31 n'est pas disposée en travers de l'espace 7. Le balancier 31 apte à bloquer le passage du cou de l'animal dans l'espace 7a sur les figures 2A et 2B est dans la deuxième position extrême PE2.

Dans l'exemple représenté, les première et deuxième butées 41, 43 de l'organe de butée 39 sont disposées d'un côté de l'axe 33 où se trouve la structure et non d'un côté de l'axe 33 où se trouve l'espace 7.

Les première et deuxième butée 41, 43 peuvent être en caoutchouc ou analogue (par exemple un matériau amortisseur de type polymère), de manière à limiter les bruits lorsque le balancier 31 atteint l'une des première et deuxième positions extrêmes PE1, PE2 et vient en contact avec l'une ou l'autre des première et deuxième butées 41, 43.

Dans l'exemple représenté, la deuxième butée 43 comprend une saillie 44 en caoutchouc ou analogue. Il faut comprimer la saillie 44 pour amener le balancier 31 dans la position de référence PR ou dans la première position extrême PE1.

Dans ce mode de réalisation, les première et deuxième butées 41, 43 sont montées sur un support 45 de l'organe de butée 39, ayant une forme sensiblement de U. Les première et deuxième butées 41, 43 sont montées sur la barre centrale du U, et les portions d'extrémité libre des bras latéraux du U sont montées sur l'axe 33 via des orifices traversants.

Le balancier 31 comprend en outre, dans cet exemple de réalisation, un élément 46 qui, lorsque le balancier est hors de sa position de blocage, forme un obstacle dans l'ouverture ainsi libéré sous l'extrémité inférieure 35a du balancier. Ceci permet d'éviter qu'un petit animal tel qu'un veau, ne passe une partie de son corps dans cet espace, au risque de se retrouver coincé lorsque le balancier reprend sa position de blocage.

La barrière 1 comprend en outre un organe de verrouillage 51 du balancier 31. L'organe de verrouillage 51 est ici formé par un plat (un fer plat) 53 dans lequel est ménagée une lumière 54.

Sur les figures 4, 5, 6, 7A et 7B, le plat 53 est fixé à la première portion de montage 21 du premier montant 11 sur la figure 6, ici par soudage. Toutefois, dans le mode de réalisation où les structures latérales 5 sont montées directement sur le longeron, le plat est fixé sur le longeron directement, comme représenté sur les figures 1A, 2A et 3A, par exemple par soudure. Le plat 53 pourrait toutefois être fixé au longeron 3 ou à la première portion de montage 21 du premier montant 11 par tout autre moyen connu de l'homme du métier.

Le plan dans lequel est inscrite une surface latérale du plat 53 est sensiblement normal à l'axe du longeron 3. Le plat 53 se trouve sous la première portion 35 du balancier 31 lorsque le balancier 31 est dans la position de référence PR.

Le balancier 31 comprend un organe de coopération 55 configuré pour coopérer avec une portion du plat 53 formant une butée de façon à maintenir le balancier 31 dans une position de blocage, correspondant ici à la position de référence PR. L'organe de coopération 55 est monté sur la première portion 35 du balancier 31, au niveau d'une portion d'extrémité libre 35a de la première portion 35. Dans le mode de réalisation représenté, l'organe de coopération 55 comprend un élément mobile, par rapport aux première et deuxième portions 35, 37 du balancier 31, par exemple un cliquet 59. Dans le mode de réalisation représenté, un embout 60 en matière plastique, par exemple en élastomère, couvre une portion d'extrémité du cliquet 59. Dans l'exemple représenté, le cliquet 59 est apte à pivoter autour d'un axe 57 sensiblement normal aux premier et deuxième plans P1 et P2. L'axe 57 est ici monté sur un support 61 fixé à la portion d'extrémité libre 35a de la première portion 35. En effet, le support 61 comprend ici des orifices traversants 61ba et 61ca, dans lesquels peut s'insérer l'axe 57. Le support 61 a ici une forme de U. La barre centrale 61a du U étant fixée à la portion d'extrémité libre 35a de la première portion 35 par un quelconque moyen connu de l'homme du métier, par exemple par soudage. Les barres latérales du U 61b, 61c comprennent les orifices traversants 61ba et 61ca dans lesquels l'axe 57 est monté.

Selon une variante, le cliquet 59 pourrait être déformable élastiquement et être montée de manière fixe à la portion d'extrémité libre 35a de la première portion 35 du balancier 31.

Selon une autre variante, le cliquet 59 pourrait être monté directement dans la portion d'extrémité libre 35a de la première portion 35 du balancier 31.

Le cliquet 59 est donc apte à occuper une position dans laquelle elle vient en appui contre le plat 53 formant la butée et une position dans laquelle le cliquet 59 peut éviter le plat 53 formant la butée pour permettre au balancier 31 de pivoter librement.

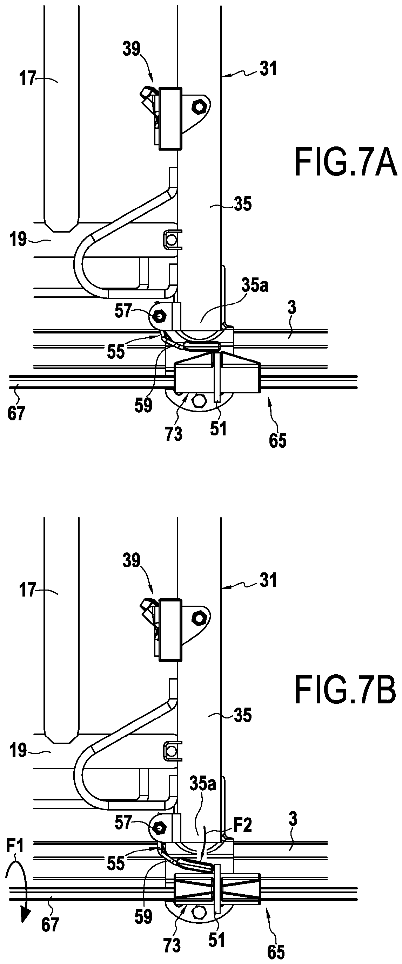

La barrière 1 comprend en outre un système de déverrouillage 65 du balancier 31, configuré pour coopérer avec l'organe de verrouillage 51. Le système de déverrouillage 65 peut occuper une position de déverrouillage, représentée en figure 7A, et une position inactive, représentée en figure 7B. Dans la position inactive, l'organe de verrouillage 51 est apte à bloquer le balancier 31 en position de blocage. Dans la position de déverrouillage, l'organe de verrouillage est neutralisé de façon à permettre le mouvement du balancier 31 hors de la position de blocage. Dans la position de déverrouillage, le système de déverrouillage 65 coopère avec le cliquet 59 de sorte à le faire pivoter autour de l'axe 57 et ainsi passer au-dessus du plat 53.

Le système de déverrouillage 65 comprend une tringle 67 pivotante et un manchon 73. La tringle 67 est pivotante autour de l'axe du manchon 73. Le manchon 73 comprend une lumière 74 dans laquelle la tringle 67 est montée libre en coulissement. La tringle 67 a ici une forme de demi-lune de façon à limiter son encombrement. La lumière 74 du manchon 73 a également une forme de demi-lune. Toutefois, la tringle 67 et la lumière 74 du manchon 73 pourraient avoir toute autre forme, permettant de coopérer avec le manchon 73 pour que la rotation de la tringle 67 entraîne la rotation du manchon 73. La tringle 67 et la lumière 74 du manchon 73 sont de forme complémentaire. Le manchon 73 est ici en matière plastique.

L'axe de la tringle 67 est donc décalé par rapport à l'axe du manchon 73, mais la tringle 67 est configurée pour pivoter autour de l'axe du manchon 73.

La tringle 67 et le manchon 73 sont ainsi portés par l'organe de verrouillage 51 et donc par le plat 53 qui forme également un support.

Le plat 53 forme donc d'une part une butée contre laquelle l'organe de coopération 55 vient en appui dans la position de blocage du balancier 31 et d'autre part un support, configuré pour porter le manchon 73, et la tringle 67 via le manchon 73.

Comme décrit, dans ce mode de réalisation, l'organe de verrouillage 51 a une forme de plat. L'organe de verrouillage 51 pourrait cependant avoir toute forme lui permettant d'avoir une fonction de butée et une fonction de support du manchon 73 et de la tringle 67.

Le manchon 73 comprend au moins une rampe 75. Dans le mode de réalisation représenté, le manchon 73 comprend une première rampe 75 et une deuxième rampe 77. Les première et deuxième rampes 75, 77 convergent l'une vers l'autre. Les première et deuxième rampes 75, 77 sont espacées l'une de l'autre d'une distance d de sorte à ce qu'une portion du plat 53, ayant une épaisseur sensiblement inférieure à la distance d, puisse s'insérer entre les première et deuxième rampes 75, 77. Les rampes sont ici configurées de sorte que leur hauteur varie lorsqu'on les parcourt parallèlement à la direction longitudinale du longeron. Comme indiqué, le manchon peut cependant ne pas avoir de rampe ou avoir au moins une rampe orientée différemment, par exemple en ayant une hauteur qui varie radialement.

Ainsi, lorsqu'un utilisateur monte le manchon 73, il l'insère dans la lumière 54 selon l'inclinaison prédéterminée, puis, lorsque le plat 53 se trouve au niveau de l'espace entre les première et deuxième rampes 75, 77, l'utilisateur fait pivoter le manchon 73 autour de son axe, et ainsi les première et deuxième rampe sont disposée de part et d'autre du plat 53 et le manchon 73 est ainsi porté par le plat 53.

Dans la position de déverrouillage, les première et deuxième rampes 75, 77 convergent vers le bord externe supérieur du plat 53, c'est-à-dire dans la deuxième direction Y vers la portion d'extrémité 35a de la première portion 35 du balancier 31, de sorte que la languette peut passer au-dessus du plat 53. Autrement dit, dans la position de déverrouillage, l'espace entre les première et deuxième rampes 75, 77 forme un emplacement pour la portion du plat 53 formant la butée. Ainsi, les première et deuxième rampes 75, 77 absorbent entièrement la portion du plat 53 formant la butée. La portion du plat 53 formant la butée est donc escamotée entre les première et deuxième rampes 75, 77. La hauteur des première et deuxième rampes est dont supérieure ou égale à la hauteur de la portion du plat 53 formant la butée. Ainsi, le balancier 31 peut se déplacer entre les première et deuxième positions extrêmes PE1, PE1, hors de la position de blocage. Autrement dit, lorsque le système de déverrouillage 65 est en position de déverrouillage, le cliquet 59 peut glisser sur l'une et / ou l'autre des première et deuxième rampes 75, 77 et sur le bord externe du plat 53 de façon à échapper à la portion du plat 53 formant la butée.

Dans la position inactive, les première et deuxième rampes 75, 77 ne convergent pas dans la deuxième direction Y, mais dans une direction transversale par rapport à la deuxième direction 7, par exemple dans la troisième direction Z. Autrement dit, la portion du plat 53 formant la butée est dégagée des première et deuxième rampes 75, 77. Ainsi, le cliquet 59 ne peut pas passer au-dessus du plat 53, et le balancier 31 ne peut pas aller vers la deuxième position extrême PE2. Le balancier 31 est en position de blocage et peut pivoter entre la première position extrême PE1 et la position de référence PR seulement. La saillie 44 peut être configurée pour rappeler le balancier 31 vers la position de référence PR. La saillie peut être formée dans un matériau anti-bruit, par exemple du type élastomère, afin de diminuer les bruits lors des mouvements du balancier.

Ainsi, dans la position inactive représentée en figure 7B, les première et deuxième rampes 75, 77 adoptent une première position, dans laquelle la portion du plat 53 formant la butée est dégagée, et, dans la position de déverrouillage représentée en figure 7A, les première et deuxième rampes 75, 77 adoptent une deuxième position pour échapper à la portion du plat 53 formant la butée.

Les première et deuxième rampes 75, 77 passent de la première position à la deuxième position, et inversement, par une rotation de la tringle 67 autour de l'axe du manchon 73. Dans le mode de réalisation représenté, les première et deuxième rampes 75, 77 sont configurées pour pivoter sur une plage angulaire d'environ 90°, c'est-à-dire entre 0 et 90° par rapport à la deuxième direction Y. La barrière peut comprendre une butée (non-visible) permettant de limiter la plage angulaire du manchon de sorte que lorsque le manchon 73 est monté dans la lumière 54, le manchon 73 ne puisse plus adopter l'inclinaison prédéterminée permettant son montage et son démontage. Pour pouvoir démonter le manchon 73, il faut dans un premier temps démonter la butée. Les risques de démontage non souhaité du manchon 73 sont donc limités. Par exemple, une butée en rotation empêchant le manchon 73 de se trouver dans sa position de montage est formée par une manette de commande (non représentée) de la tringle 67, configurée pour être actionnée par un utilisateur pour faire passer le système de déverrouillage 65 de la position de déverrouillage à la position inactive et inversement.

Grâce à l'actionnement de la manette de commande, le système de déverrouillage 65 est apte à passer de la position de déverrouillage à la position inactive, et inversement, par rotation de la tringle 67 autour l'axe du manchon 73, qui entraine le pivotement du manchon 73, comme représenté par les flèches F1 et F2 sur la figure 7B.

Bien que la présente invention ait été décrite en se référant à des modes de réalisation spécifiques, il est évident que des modifications et des changements peuvent être effectués sur ces exemples sans sortir de la portée générale de l'invention telle que définie par les revendications.

## Revendications

1. Barrière (1) de type cornadis, comprenant :
- un longeron (3) inférieur,
- au moins une première et une deuxième structure latérale (5), montées sur le longeron (3), un espace (7) pour le passage du cou d'un animal étant délimité par le longeron (3) et les première et deuxième structures latérales (5),
- un balancier (31) configuré pour adopter une position de blocage dans laquelle le balancier (31) fait obstacle au passage du cou d'un animal dans l'espace (7) et pour quitter la position de blocage et libérer le passage du cou de l'animal dans l'espace (7),
- un organe de verrouillage (51) configuré pour retenir le balancier (31) dans la position de blocage, l'organe de verrouillage (51) comprenant une butée (53), contre laquelle un organe de coopération (55) du balancier (31) est destiné à venir en appui dans la position de blocage, et
- un système de déverrouillage (65) configuré pour occuper une position de déverrouillage pour permettre le mouvement du balancier (31) hors de la position de blocage, et une position inactive pour permettre à l'organe de verrouillage (51) de retenir le balancier (31) dans la position de blocage,
**caractérisée en ce que** le système de déverrouillage (65) comprend au moins une rampe (75, 77) configurée pour :
- dans la position inactive du système de déverrouillage (51), adopter une première position écartée de l'organe de verrouillage dans laquelle l'organe de verrouillage (51) est dégagé pour pouvoir retenir le balancier (31) dans la position de blocage, et
- dans la position de déverrouillage du système de déverrouillage (65), adopter une deuxième position dans laquelle l'organe de coopération (55) est apte à glisser sur l'au moins une rampe (75, 77) pour échapper à l'organe de verrouillage (51), de sorte que le système de déverrouillage (65) neutralise l'organe de verrouillage (51) de façon à permettre le mouvement du balancier (31) hors de la position de blocage.

2. Barrière (1) de type cornadis selon la revendication 1, dans laquelle le système de déverrouillage (65) comprend un emplacement permettant de loger l'organe de verrouillage (51) dans son épaisseur lorsque le système de déverrouillage (65) est dans la position de déverrouillage.

3. Barrière (1) de type cornadis selon la revendication 1 ou 2, dans laquelle l'au moins une rampe (75, 77) passe de la première à la deuxième position et inversement par rotation autour d'un axe parallèle au longeron (3).

4. Barrière (1) de type cornadis selon la revendication 3, dans laquelle l'au moins une rampe (75, 77) est formée sur un manchon (73) mobile en rotation autour de son axe, parallèle au longeron (3).

5. Barrière (1) de type cornadis selon la revendication 4, dans laquelle l'organe de verrouillage (51) comprend un support (53), le manchon (73) étant porté par le support (53).

6. Barrière (1) de type cornadis selon l'une des revendications 4 ou 5, dans laquelle le manchon (73) est monté sur une tringle (67) parallèle au longeron (3) et pivotante autour de l'axe du manchon (73).

7. Barrière (1) de type cornadis selon l'une des revendications précédentes, dans laquelle l'organe de verrouillage (51) est fixé sur le longeron (3).

8. Barrière (1) de type cornadis selon l'une des revendications 1 à 7, dans laquelle les première et deuxième structures latérales sont montées sur le longeron (3) via au moins un élément de montage (9a, 9b), l'organe de verrouillage (51) étant fixé sur l'au moins un élément montage (9a, 9b) de la première structure latérale (5).

9. Barrière (1) de type cornadis selon la revendication 8, dans laquelle l'au moins un élément de montage (9a, 9b) comprend deux portions de montage (21, 23), configurées pour être fixées l'une à l'autre de façon à former une coquille enserrant le longeron (3).

10. Barrière (1) de type cornadis selon l'une des revendications précédentes, comprenant une pluralité de structures latérales (5) formant une pluralité d'espaces (7) de passage du cou d'un animal, chaque structure latérale (5) étant fixée sur le longeron (3).

## Patentansprüche

1. Schranke (1) vom Typ Fressgitter, umfassend:
- einen unteren Holm (3),
- mindestens eine erste und eine zweite seitliche Struktur (5), die auf dem Holm (3) montiert sind, wobei ein Raum (7) für den Durchgang des Halses eines Tieres durch den Holm (3) und die erste und zweite seitliche Struktur (5) begrenzt ist,
- einen Schwinghebel (31), der dazu ausgestaltet ist, eine Blockierposition einzunehmen, in welcher der Schwinghebel (31) den Durchgang des Halses eines Tieres in dem Raum (7) behindert, und die Blockierposition zu verlassen und den Durchgang des Halses des Tieres in dem Raum (7) freizugeben,
- ein Verriegelungselement (51), das dazu ausgestaltet ist, den Schwinghebel (31) in der Blockierposition zu halten, wobei das Verriegelungselement (51) einen Anschlag (53) umfasst, gegen den ein Kooperationselement (55) des Schwinghebels (31) in der Blockierposition in Anlage kommen soll, und
- ein Entriegelungssystem (65), das dazu ausgestaltet ist, eine Entriegelungsposition einzunehmen, um die Bewegung des Schwinghebels (31) aus der Blockierposition zu ermöglichen, und eine inaktive Position, um dem Verriegelungselement (51) zu ermöglichen, den Schwinghebel (31) in der Blockierposition zu halten,
**dadurch gekennzeichnet, dass** das Entriegelungssystem (65) mindestens eine Rampe (75, 77) umfasst, die ausgestaltet ist zum:
- Einnehmen einer ersten beabstandeten Position des Verriegelungselements, in der das Verriegelungselement (51) gelöst ist, um den Schwinghebel (31) in der Blockierposition halten zu können, in der inaktiven Position des Entriegelungssystems (65), und
- Einnehmen einer zweiten Position, in der das Kooperationselement (55) in der Lage ist, auf mindestens einer Rampe (75, 77) zu gleiten, um dem Verriegelungselement (51) auszuweichen, sodass das Entriegelungssystem (65) das Verriegelungselement (51) auf eine Weise neutralisiert, dass die Bewegung des Schwinghebels (31) aus der Blockierposition ermöglicht wird, in der Entriegelungsposition des Entriegelungssystems (65).

2. Schranke (1) vom Typ Fressgitter nach Anspruch 1, wobei das Entriegelungssystem (65) eine Stelle umfasst, die ermöglicht, das Verriegelungselement (51) in seiner Dicke aufzunehmen, wenn sich das Entriegelungssystem (65) in der Entriegelungsposition befindet.

3. Schranke (1) vom Typ Fressgitter nach Anspruch 1 oder 2, wobei die mindestens eine Rampe (75, 77) von der ersten in die zweite Position und umgekehrt durch Drehung um eine Achse parallel zu dem Holm (3) übergeht.

4. Schranke (1) vom Typ Fressgitter nach Anspruch 3, wobei die mindestens eine Rampe (75, 77) auf einer Hülse (73) gebildet ist, die drehbeweglich um ihre Achse parallel zu dem Holm (3) ist.

5. Schranke (1) vom Typ Fressgitter nach Anspruch 4, wobei das Verriegelungselement (51) eine Stütze (53) umfasst, wobei die Hülse (73) durch die Stütze (53) getragen wird.

6. Schranke (1) vom Typ Fressgitter nach einem der Ansprüche 4 oder 5, wobei die Hülse (73) auf einem Gestänge (67) parallel zu dem Holm (3) und schwenkbar um die Achse der Hülse (73) montiert ist.

7. Schranke (1) vom Typ Fressgitter nach einem der vorhergehenden Ansprüche, wobei das Verriegelungselement (51) auf dem Holm (3) befestigt ist.

8. Schranke (1) vom Typ Fressgitter nach einem der Ansprüche 1 bis 7, wobei die erste und die zweite seitliche Struktur auf dem Holm (3) über mindestens ein Montageelement (9a, 9b) montiert sind, wobei das Verriegelungselement (51) auf dem mindestens einen Montageelement (9a, 9b) der ersten seitlichen Struktur (5) befestigt ist.

9. Schranke (1) vom Typ Fressgitter nach Anspruch 8, wobei das mindestens eine Montageelement (9a, 9b) zwei Montageabschnitte (21, 23) umfasst, die dazu ausgestaltet sind, auf eine Weise aneinander befestigt zu sein, dass eine Hülle gebildet wird, die den Holm (3) umschließt.

10. Schranke (1) vom Typ Fressgitter nach einem der vorhergehenden Ansprüche, umfassend mehrere seitliche Strukturen (5), die mehrere Räume (7) für den Durchgang des Halses eines Tieres bilden, wobei jede seitliche Struktur (5) auf dem Holm (3) befestigt ist.

## Claims

1. A barrier (1) of the headlock type, comprising:
- a lower side rail (3),
- at least a first and a second lateral structure (5), mounted on the side rail (3), a space (7) for the passage of the neck of an animal being delimited by the side rail (3) and the first and second lateral structures (5),
- a rocking arm (31) configured to adopt a blocking position in which the rocking arm (31) obstructs the passage of the neck of an animal in the space (7) and to leave the blocking position and free the passage of the neck of the animal in the space (7),
- a locking member (51) configured to retain the rocking arm (31) in the blocking position, the locking member (51) comprising a stop (53), against which a cooperation member (55) of the rocking arm (31) is intended to bear in the blocking position, and
- an unlocking system (65) configured to occupy an unlocking position to allow the movement of the rocking arm (31) out of the blocking position, and an inactive position to allow the locking member (51) to retain the rocking arm (31) in the blocking position,
**characterized in that** the unlocking system (65) comprises at least one ramp (75, 77) configured to:
- in the inactive position of the unlocking system (51), adopt a first position away from the locking member in which the locking member (51) is released to be able to retain the rocking arm (31) in the blocking position, and
- in the unlocking position of the unlocking system (65), adopt a second position in which the cooperation member (55) is able to slide on the at least one ramp (75, 77) to escape the locking member (51), so that the unlocking system (65) neutralizes the locking member (51) so as to allow the movement of the rocking arm (31) out of the blocking position.

2. The barrier (1) of the headlock type according to claim 1, wherein the unlocking system (65) comprises a location making it possible to house the locking member (51) in its thickness when the unlocking system (65) is in the unlocking position.

3. The barrier (1) of the headlock type according to claim 1 or 2, wherein the at least one ramp (75, 77) passes from the first to the second position and vice versa by rotation about an axis parallel to the side rail (3).

4. The barrier (1) of the headlock type according to claim 3, wherein the at least one ramp (75, 77) is formed on a sleeve (73) movable in rotation about its axis, parallel to the side rail (3).

5. The barrier (1) of the headlock type according to claim 4, wherein the locking member (51) comprises a support (53), the sleeve (73) being carried by the support (53).

6. The barrier (1) of the headlock type according to any of claims 4 or 5, wherein the sleeve (73) is mounted on a rod (67) parallel to the side rail (3) and pivoting about the axis of the sleeve (73).

7. The barrier (1) of the headlock type according to any of the preceding claims, wherein the locking member (51) is fixed on the side rail (3).

8. The barrier (1) of the headlock type according to any of claims 1 to 7, wherein the first and second lateral structures are mounted on the side rail (3) via at least one mounting element (9a, 9b), the locking member (51) being fixed on the at least one mounting element (9a, 9b) of the first lateral structure (5).

9. The barrier (1) of the headlock type according to claim 8, wherein the at least one mounting element (9a, 9b) comprises two mounting portions (21, 23), configured to be fixed to each other so as to form a shell enclosing the side rail (3).

10. The barrier (1) of the headlock type according to any of the preceding claims, comprising a plurality of lateral structures (5) forming a plurality of spaces (7) for the passage of the neck of an animal, each lateral structure (5) being fixed on the side rail (3).
